# EUROPEAN PATENT SPECIFICATION

(11) **EP 1 766 968 B1**
(45) Date of publication and mention of the grant of the patent: **27.08.2008**
(21) Application number: 05783057.2
(22) Date of filing: 18.07.2005
(51) Int. Cl.: H04N 5/76

(54) **Video recording/reproducing apparatus**
Gerät zum Aufzeichnen und zur Wiedergabe von Videosignalen
Dispositif d'enregistrement et de reproduction de video

(30) Priority: 15.07.2004 KR 20040055123
(43) Date of publication of application: 28.03.2007
(73) Proprietor: Samsung Electronics Co., Ltd., Suwon-si, Gyeonggi-Do (KR)
(72) Inventor: KIM, Eung-Sun 402-1505, Cheongmyeong-maeul, Gyeonggi-do (KR); YOO, Seung-Bong 220-903, Woncheon Jugong Apt., Gyeonggi-do (KR)
(74) Representative: Brandon, Paul Laurence
(86) International application number: PCT/IB2005/002869
(87) International publication number: WO 2006/027687

(56) References cited:
- EP-A- 1 271 938
- US-B1- 6 452 935
- HAVI ORGANIZATION: "HAVi, the A/V digital network revolution" INTERNET ARTICLE, [Online] 15 February 2001 (2001-02-15), XP002368632 Retrieved from the Internet: URL:http://www.havi.org/pdf/white.pdf>
- MICROSOFT/INTEL: "PC99 System Design Guide Preview Draft, Version 0.3, A technical Reference for Designing PCs and Peripherals for the Microsoft Windows Family of Operating Systems" PC 99 SYSTEM DESIGN GUIDE, 1999, pages 89-395, XP002306879

## Description

### BACKGROUND OF THE INVENTION

### Field of the Invention

The present invention relates to video recording/reproducing apparatus. More particularly, the present invention relates to a video recording/reproducing apparatus capable of recording and reproducing analog and digital broadcast signals and outputting one of the analog and digital broadcast signals for watching while recording the other signal.

### Description of the Related Art :

In general, a combination system refers to a video recording/reproducing apparatus which integrates different types of devices such as an optical medium reproduction device, for example, like a digital versatile disc (DVD) and a video cartridge recorder (VCR) for reproducing a video signal recorded on a video tape or recording the video signal on the video tape. The combination system has a VCR reproduction device and a DVD reproduction device accommodated in a single housing thereof, so as to enable a user to selectively reproduce a video tape or an optical medium such as a DVD or a compact disc recordable (CDR). That is, the conventional combination system is configured for a user to selectively drive a reproduction device provided in the single housing, so the user can not operate the VCR while reproducing an optical medium, or vice versa.

Further, the conventional combination system mainly uses a hard disc drive (HDD) or a flash read only memory (ROM) as a storage medium to store a video signal read from an optical medium such as a DVD or a compact disc (CD), and uses an analog storage medium such as a video tape for the VCR. That is, the conventional combination system records [video signals on storage media corresponding to the respective analog and analog/digital-converted video signal and a digital video signal on a hard disc drive. But the hard disc drive is very expensive and is difficult to install and remove. Furthermore, the conventional combination system mainly reproduces and records digital and analog video signals recorded on a video tape or an optical medium such as a DVD or a CD, and, when a user wants to record a video source while watching another video source, the conventional combination system has difficulties in satisfying such user demands.

EP-A-1 271 938 discloses a video recording/reproducing apparatus according to the pre-characterising portion of claim 1.

### SUMMARY OF THE INVENTION

The present invention has been developed in order to solve the above drawbacks and other problems associated with the conventional combination system and to provide other advantages. An aspect of the present invention is to provide a video recording/reproducing apparatus according to claim 1.

Further features of the present invention are set out in the appended claims.

### BRIEF DESCRIPTION OF THE DRAWINGS

The above aspects and features of the present invention will be more apparent by describing certain exemplary embodiments of the present invention with reference to the accompanying drawings, in which:

FIG. IA and FIG. IB are schematic diagrams illustrating a video recording/reproducing apparatus according to an exemplary embodiment of the present invention;

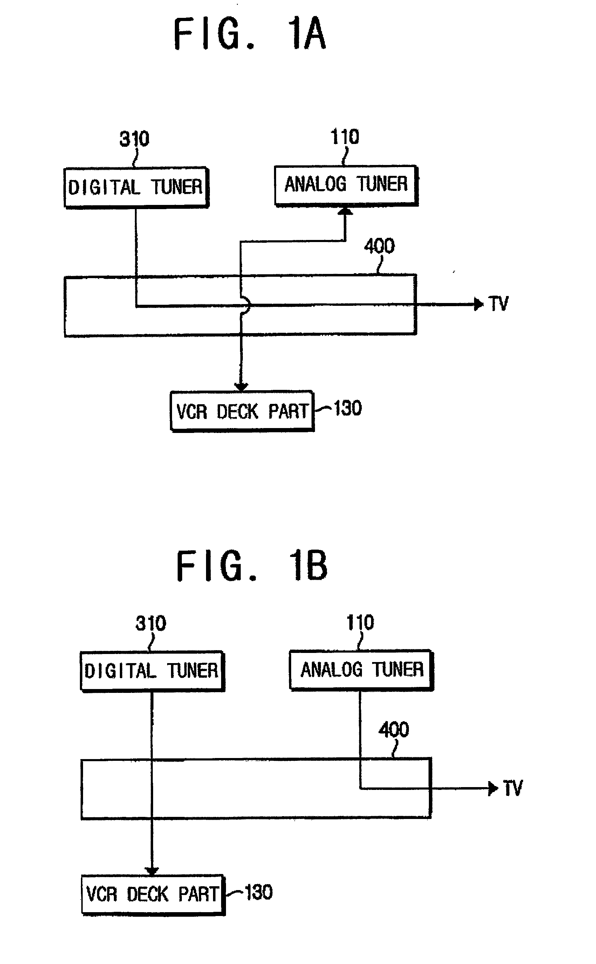

FIG. 2 is a diagram illustrating a recording process for the video recording/reproducing apparatus of FIG. 1;

FIG. 3 is a block diagram illustrating a video recording/reproducing apparatus according to an exemplary embodiment of the present invention.

Throughout the drawings, it should be noted that like reference numbers are used to depict the same or similar elements, features and structures.

### DETAILED DESCRIPTION OF EXEMPLARY EMBODIMENTS

Hereinafter, the present invention will be described in detail with reference to the accompanying drawings.

FIG. IA and FIG. IB are schematic diagrams illustrating a video recording/reproducing apparatus according to an exemplary embodiment of the present invention.

First of all, FIG. IA is a schematic diagram illustrating a recording of an analog broadcast signal while a user receives a digital broadcast signal. As shown in FIG. IA, a digital broadcast signal received by a digital tuner 310 is sent for viewing to a display device such as a television (TV) through a video signal switching unit 400, and an analog broadcast signal received by an analog tuner 110 is sent for recording to a video cartridge recorder (VCR) deck part 130.

Next, FIG. IB is a schematic diagram illustrating the recording of a digital broadcast signal by a user while receiving an analog broadcast signal. As shown in FIG. IB, an analog broadcast signal received by the analog tuner 110 is sent for viewing to a display device such as a TV through the video signal switching unit 400, and a digital broadcast signal received by the digital tuner 310 is sent for recording to the VCR deck part 130.

Therefore, a user can record an analog broadcast program on a video tape ejectably inserted into the VCR deck part 130 while watching a digital broadcast program, as well as record a digital broadcast program at the VCR deck part 130 while watching an analog broadcast program.

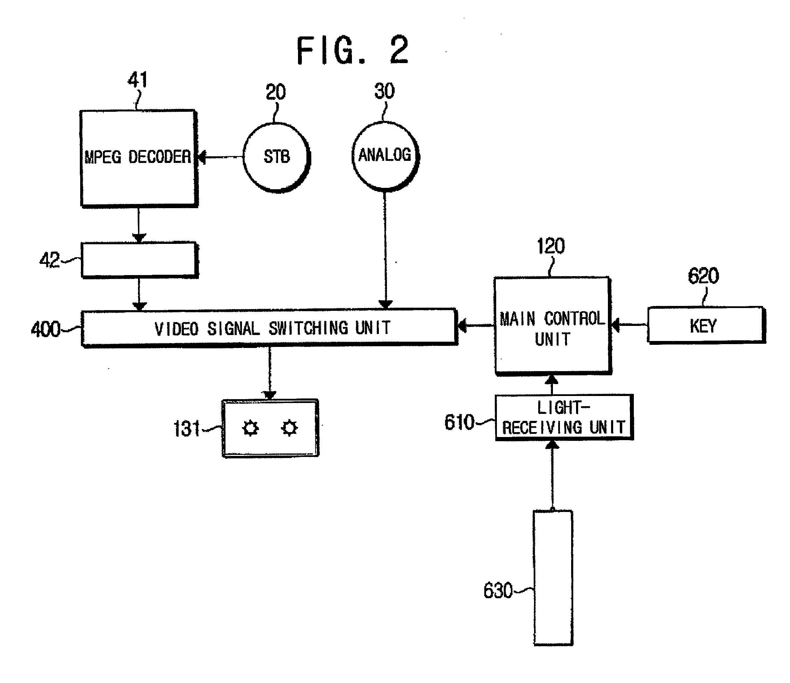

FIG. 2 is a diagram illustrating a recording process for the combination system shown in FIGS. IA and IB.

As shown in FIG. 2, a digital broadcast signal (DBS) 20 sent from the digital tuner 310 is sent to the video signal switching unit 400 through a moving picture experts group (MPEG) decoder 41 and a digital/analog (D/A) converter 42, and an analog broadcast signal 30 is directly sent to the video signal switching unit 400. That is, the video signal switching unit 400 receives a digital signal for a digital broadcast signal 20 and an analog signal sent from the analog tuner 110, and enables one of the two signals to be recorded on the video tape 131.

The analog signal 30 can be an over the air broadcast signal or a video signal obtained from the VCR deck part 130, and the digital broadcast signal 20 can be a video signal obtained from an optical recording medium such as a digital versatile disc (DVD), a compact disc read only memory (CDROM), or a video signal output from a set-top box. If the digital broadcast signal 20 is a video signal obtained from an optical recording medium such as a DVD or a CDROM, such a video signal is converted into an analog video signal through the digital/analog converter 42, recorded on the video tape 131, or reproduced on a display device.

The main control unit 120 shown in FIG. 2 is provided in the video recording/reproducing apparatus according to an exemplary embodiment of the present invention, and controls overall operations of the video recording/reproducing apparatus. The main control unit 120 enables one of the broadcast and video signals received from the video signal switching unit 400 to be recorded on the video tape 131, and enables the other signal to be reproduced on a display device, in response to the control signals generated from a light-receiving unit 610 inputting a control signal from a remote controller 630 as well as generated from the operation key 620 provided in the main body of the video recording/reproducing apparatus.

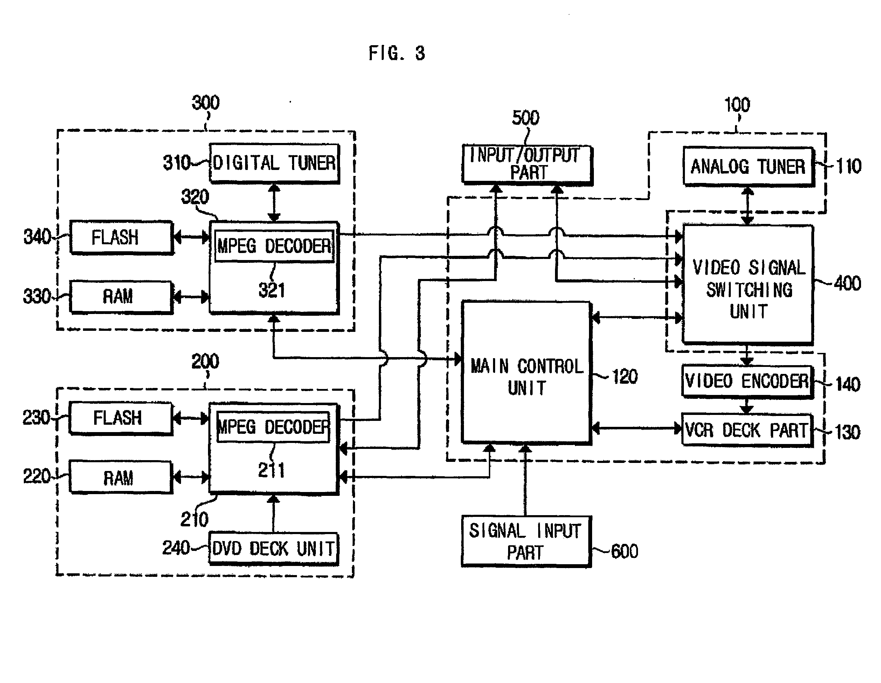

FIG. 3 is a block diagram illustrating the video recording/reproducing apparatus according to an exemplary embodiment of the present invention.

The video recording/reproducing apparatus shown in FIG. 3 is provided with a VCR part 100, a DVD part 200, a digital broadcast-receiving part 300, an input/output part 500, and a signal input part 600.

The VCR part 100 reads and reproduces a video signal recorded on a medium such as a video tape 131, or records on the video tape 131 an external analog broadcast signal. Therefore, the VCR part 100 comprises the analog tuner 110 for receiving analog broadcast signals, the VCR deck part 130 for driving the video tape 131, a video encoder 140 for converting a video signal applied to the VCR deck part 130 into one of the national television system committee (NTSC), phase alternating line (PAL), and sequential couleur avec memoire (SECAM) standards, and the main control unit 120 for controlling the above components.

The main control unit 120 has a function for enabling one of the VCR part 100, DVD part 200, and digital broadcast-receiving part 300 in response to a control signal applied through the signal input part 600. Further, the main control unit 120 outputs a_video signal to the input/output part 500 from any of the VCR part 100, DVD part 200, and digital broadcast-receiving part 300 in response to a control signal applied through the signal input part 600, so as to send the video signal to a video reproducing device such as plasma display panel (PDP), liquid crystal display (LCD), or TV, and, at the same time, the main control unit 120 sends another video signal to the video encoder 140 via the video signal switching unit 400 so that the video signal can be stored on a video tape.

For example, a remote controller 630 generates a control signal to be applied to the signal input part 600. The remote controller 630 selects and drives any of the VCR part 100, DVD part 200, and digital broadcast-receiving part 300 provided in the video recording/reproducing apparatus. For example, if a user presses the record key on the remote controller 630, a video signal output from the DVD part 200 can be applied to the VCR deck part 130 for, recording, and, at the same time, if the user drives the digital broadcast-receiving part 300, the main control unit 120 controls the video signal switching unit 400 without cancellation of the recording process of the previously driven DVD part 200 so that a video signal output from the digital broadcast- receiving part 300 can be sent to a video reproduction device such as PDP, LCD, or TV through the input/output part 500.

The aforementioned driving method is only exemplary, and the exemplary embodiments of the present invention, that is, the selectively reproducing and recording by the main control unit 120 the video signals output from plural reproduction devices can be implemented by diverse methods.

The DVD part 200 reproduces a video signal stored on a DVD title or a compact disk read only memory (CDROM). The DVD part 200 comprises a DVD deck unit 240 for reading a video signal from the DVD title, a DVD control unit 210 comprising a MPEG decoder 211 therein for MPEG-decoding the read video signal, a random access memory (RAM) 220 for providing storage space necessary for decoding when the read video signal is MPGE-decoded by the DVD control unit 210, and a flash ROM 230 comprising control programs therein for the DVD control unit 210.

The digital broadcast-receiving part 300 comprises a digital tuner 310 for receiving a digital broadcast signal transmitted from satellites or receiving digital broadcast signals through a wired network, a DBS control unit 320 comprising a MPEG decoder 321 therein for MPEG-decoding a digital broadcast signal received from the digital tuner 310, a RAM 330 for providing storage space necessary for decoding when the received video signal is MPEG-decoded, and a flash read only memory (ROM) 330 comprising control programs therein for the DBS control unit 320.

The signal input part 600 receives a control signal generated from a remote controller 630 or an operation key 620, and sends the control signal to the main control unit 120.

The input/output part 500 receives a video signal from video signal sources different from the DVD part 200, VCR part 100, and digital broadcast-receiving part 300 or sends video signals to a display device such as TV, PDP, LCD, and projector.

The video signal switching unit 400 sends to the VCR deck part 130 one of digital and analog video signals selected by the main control unit 120 in response to a control signal generated from a light-receiving unit 610 or a operation key 620, so that the video signal can be recorded on the video tape 131, and the other video signal is output to the input/output part 500 to be sent to a display device such as TV, LCD, PDP, or projector.

Preferably, the video signal switching unit 400 sends a digital video signal to the input/output part 500 when an analog broadcast signal is recorded on the video tape 131, or sends the analog broadcast signal to the input/output part 500 while recording the digital broadcast signal on the video tape 131. That is, the video signal switching unit 400 can establish transmission paths of the two video sources for the analog broadcast signal and the digital broadcast signal in different directions.

Therefore, a user selectively watches an analog broadcast signal or a digital broadcast signal he or she wants, while another video signal can be recorded on a storage medium such as the video tape 131. Furthermore, there is an advantage to recording the analog and digital broadcast signals on a low-priced storage medium such as the video tape 131 since the manufacturing cost of the video recording/reproducing apparatus can be reduced.

As aforementioned, an exemplary embodiment of the present invention records one of the broadcast signals output from the respective tuners capable of receiving analog and digital broadcast signals while reproducing the other video signal through a display device, so a user can record a broadcast program corresponding to the digital broadcast signal while watching a broadcast program corresponding to the analog broadcast signal or record the broadcast program corresponding to the analog broadcast signal while watching the broadcast program corresponding to the digital broadcast signal.

Therefore, the present invention eliminates the conventional storage media respectively corresponding to the analog and digital broadcast signals, as well as not requires a high-priced storage medium such as hard disc drive in order to integrate the storage media.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A video recording/reproducing apparatus comprising:
a first signal-receiving part for receiving an analog broadcast signal; and
a second signal-receiving part for receiving a digital broadcast signal;
**characterised in that**;
the first signal receiving part comprises a controller configured to establish signal paths in order that any of the analog and digital broadcast signals from the first and second signal-receiving parts, according to an externally applied control signal, is transferred to a display device, and the other broadcast signal is recorded on a storage medium; wherein
the system further comprises a video signal switching part for selectively providing the output signals of the first signal-receiving part and the second signal-receiving part to the display device and the storage medium, respectively, based on the signal paths established by the controller; and wherein the storage medium is a video tape; in which the apparatus is configured to record an analog video signal on the video tape when recording the digital broadcast signal.

2. The video recording/reproducing apparatus as claimed in claim 1, wherein the second signal-receiving part is at least one of a digital broadcast signal- receiving device and an optical recording/reproducing device.

3. The video recording/reproducing apparatus as claimed in claim 1, further comprising an optical medium reproduction device for reproducing optical media.

4. The video recording/reproducing apparatus as claimed in claim 2, wherein the controller establishes the signal paths to enable any output signal of the first signal-receiving part, second signal-receiving part, and optical medium reproduction device to be recorded on the storage medium, and to enable the other output signal to be applied to the display device.

5. The video recording/reproducing apparatus as claimed in claim 1, wherein the second signal-receiving part sends an output signal to one of the display device and the storage medium along the signal path established by the first signal-receiving part.

6. The video recording/reproducing apparatus as claimed in claim 1, wherein the first signal- receiving part has a video cassette recorder (VCR) function capable of reproducing and recording onto a video tape.

7. The video recording/reproducing apparatus as claimed in claim 1, wherein the second signal-receiving part comprises:
a moving picture experts group (MPEG) decoder for MPEG-decoding the digital broadcast signal; and
a digital/analog converter for analog/digital-converting an output signal of the MPEG decoder.

8. The video recording/reproducing apparatus as claimed in claim 1, wherein the control signal is generated by any of a remote controller and an operation key provided on the combination system.

9. The video recording/reproducing apparatus as claimed in any preceding claim, wherein the control signal is applied to the first signal-receiving part.

10. The video recording/reproducing apparatus as claimed in any one of claims 2 - 9, wherein, if the second signal-reproducing part is a plurality of digital devices, the plurality of digital devices are each connected to any of the display devices and the storage medium through a signal path established by the first signal-reproducing part.

## Patentansprüche

1. Video-Aufzeichnungs-/Wiedergabe-Gerät, enthaltend:
einen ersten Signalempfangsteil, der ein analoges Rundsendesignal empfängt; und
einen zweiten Signalempfangsteil, der ein digitales Rundsendesignal empfängt;
**dadurch gekennzeichnet, dass**
der erste Signalempfangsteil eine Steuereinheit enthält, die derart beschaffen ist, dass sie Signalwege einrichtet, damit entweder das analoge oder das digitale Rundsendesignal vom ersten und vom zweiten Signalempfangsteil gemäß einem externen Steuersignal zu einer Anzeigevorrichtung übertragen wird und das andere Rundsendesignal auf einem Speichermedium aufgezeichnet wird; wobei
das System weiterhin einen Videosignal-Umschaltteil enthält, der wahlweise die Ausgangssignale des ersten Signalempfangsteils und des zweiten Signalempfangsteils der Anzeigevorrichtung bzw. dem Speicher auf der Basis der Signalwege zuführt, die durch die Steuereinheit eingerichtet sind; und wobei das Speichermedium ein Videoband ist und das Gerät so beschaffen ist, dass es ein analoges Videosignal auf dem Videoband aufzeichnet, wenn das digitale Rundsendesignal aufgezeichnet wird.

2. Video-Aufzeichnungs-/Wiedergabe-Gerät nach Anspruch 1, bei dem der zweite Signalempfangsteil eine digitale Rundsendesignal-Empfangsvorrichtung und/oder eine optische Aufzeichnungs/Wiedergabe-Vorrichtung ist.

3. Video-Aufzeichnungs-/Wiedergabe-Gerät nach Anspruch 1, weiterhin enthaltend eine optische Medien-Wiedergabevorrichtung zum Wiedergeben optischer Medien.

4. Video-Aufzeichnungs-/Wiedergabe-Gerät nach Anspruch 2, bei dem die Steuereinheit die Signalwege einrichtet, um es zu ermöglichen, dass eines der Ausgangssignale des ersten Signalempfangsteils, des zweiten Signalempfangsteils und der optischen Medien-Wiedergabevorrichtung auf dem Speichermedium aufgezeichnet wird, und es zu ermöglichen, dass das andere Ausgangssignal der Anzeigevorrichtung zugeführt wird.

5. Video-Aufzeichnungs-/Wiedergabe-Gerät nach Anspruch 1, bei dem der zweite Signalempfangsteil ein Ausgangssignal entweder zur Anzeigevorrichtung oder zum Speichermedium entlang des Signalweges sendet, der durch den ersten Signalempfangsteil eingerichtet ist.

6. Video-Aufzeichnungs-/Wiedergabe-Gerät nach Anspruch 1, bei dem der erste Signalempfangsteil eine Videokassettenrekorder- (VCR-) Funktion hat, die in der Lage ist, auf ein Band aufzuzeichnen und von diesem wiederzugeben.

7. Video-Aufzeichnungs-/Wiedergabe-Gerät nach Anspruch 1, bei dem der zweite Signalempfangsteil enthält:
einen MPEG-Decoder (MPEG - Moving Picture Experts Group) für die MPEG-Decodierung des digitalen Rundsendesignals; und
einen Digital-/Analog-Wandler für die Analog-/Digital-Umwandlung eines Ausgangssignals des MPEG-Decoders.

8. Video-Aufzeichnungs-/Wiedergabe-Gerät nach Anspruch 1, bei dem das Steuersignal durch eine Fernsteuereinrichtung oder eine Betätigungstaste, die am Video-Aufzeichnungs-/Wiedergabe-Gerät vorgesehen ist, erzeugt wird.

9. Video-Aufzeichnungs-/Wiedergabe-Gerät nach einem der vorhergehenden Ansprüche, bei dem das Steuersignal dem ersten Signalempfangsteil zugeführt wird.

10. Video-Aufzeichnungs-/Wiedergabe-Gerät nach einem der Ansprüche 2 bis 9, bei dem, wenn der zweite Signalwiedergabeteil eine Vielzahl digitaler Vorrichtungen ist, die digitalen Vorrichtungen jeweils entweder mit einer der Anzeigevorrichtungen oder dem Speichermedium durch einen Signalweg verbunden sind, der durch den ersten Signalwiedergabeteil eingerichtet ist.

## Revendications

1. Appareil d'enregistrement/reproduction vidéo, comprenant :
une première partie réceptrice de signaux pour recevoir un signal de diffusion analogique ; et
une seconde partie réceptrice de signaux pour recevoir un signal de diffusion numérique ;
**caractérisé en ce que** : la première partie réceptrice de signaux comprend un dispositif de commande configuré pour établir des trajets de signaux afin que l'un quelconque des signaux de diffusion analogiques et numériques des première et seconde parties réceptrices de signaux, conformément à un signal de commande appliqué de l'extérieur, soit transféré à un dispositif d'affichage et que l'autre signal de diffusion soit enregistré sur un support de stockage ; dans lequel
le système comprend en outre une partie de commutation de signaux vidéo pour fournir de manière sélective les signaux de sortie de la première partie réceptrice de signaux et de la seconde partie réceptrice de signaux au dispositif d'affichage et au support de stockage, respectivement, en se basant sur les trajets de signaux établis par le dispositif de commande ; et dans lequel le support de stockage est une bande vidéo ; et dans lequel l'appareil est configuré pour enregistrer un signal vidéo analogique sur la bande vidéo lors de l'enregistrement du signal de diffusion numérique.

2. Appareil d'enregistrement/reproduction vidéo selon la revendication 1, dans lequel la seconde partie réceptrice de signaux est au moins l'un des dispositifs comprenant un dispositif récepteur de signaux de diffusion numérique et un dispositif d'enregistrement/reproduction optique.

3. Appareil d'enregistrement/reproduction vidéo selon la revendication 1, comprenant en outre un dispositif de reproduction de support optique pour reproduire des supports optiques.

4. Appareil d'enregistrement/reproduction vidéo selon la revendication 2, dans lequel le dispositif de commande établit les trajets de signaux pour permettre d'enregistrer tout signal de sortie de la première partie réceptrice de signaux, de la seconde partie réceptrice de signaux et du dispositif de reproduction de support optique sur le support de stockage et pour permettre à l'autre signal de sortie d'être appliqué au dispositif d'affichage.

5. Appareil d'enregistrement/reproduction vidéo, dans lequel la seconde partie réceptrice de signaux envoie un signal de sortie à l'un du dispositif d'affichage et du support de stockage le long du trajet de signaux établi par la première partie réceptrice de signaux.

6. Appareil d'enregistrement/reproduction vidéo selon la revendication 1, dans lequel la première partie réceptrice de signaux d'un magnétoscope à cassette (VCR) capable de reproduire et d'enregistrer sur une bande vidéo.

7. Appareil d'enregistrement/reproduction vidéo selon la revendication 1, dans lequel la seconde partie réceptrice de signaux comprend :
un décodeur de groupes d'experts d'images en mouvement (MPEG) pour le décodage MPEG du signal de diffusion numérique ; et
un convertisseur numérique/analogique pour la conversion analogique/numérique d'un signal de sortie du décodeur MPEG.

8. Appareil d'enregistrement/reproduction vidéo selon la revendication 1, dans lequel le signal de commande est généré par l'un quelconque d'un dispositif de télécommande et une touche de commande ménagée sur le système de combinaison.

9. Appareil d'enregistrement/reproduction vidéo selon l'une quelconque des revendications précédentes, dans lequel le signal de commande est appliqué à la première partie réceptrice de signaux.

10. Appareil d'enregistrement/reproduction vidéo selon l'une quelconque des revendications 2 à 9, dans lequel si la seconde partie de reproduction de signaux est une pluralité de dispositifs numériques, chacun de la pluralité de dispositifs numériques est raccordé à l'un quelconque des dispositifs d'affichage et au support de stockage à travers un trajet de signaux établi par la première partie de reproduction de signaux.
